# EUROPÄISCHE PATENTANMELDUNG

(11) **EP 4 340 160 A1**
(43) Veröffentlichungstag der Anmeldung: **20.03.2024**
(21) Anmeldenummer: 22195413.4
(22) Anmeldetag: 13.09.2022
(51) Int. Cl.: H02J 7/00, B60L 53/60, B60L 53/67

(54) **BATTERIELADESTEUERUNGSEINRICHTUNG UND BATTERIELADESTEUERUNGSVERFAHREN**

(71) Anmelder: Andreas Stihl AG & Co. KG, 71336 Waiblingen (DE)
(72) Erfinder: Kim, Hyun Young, 70329 Stuttgart (DE); Frech, Fabian, 73110 Hattenhofen (DE); Weichert, Maximilian, 71686 Remseck (DE); Spindler, Christian, 70565 Stuttgart (DE)
(74) Vertreter: Patentanwälte Ruff, Wilhelm, Beier, Dauster & Partner mbB

(57) **Zusammenfassung**

1. Batterieladesteuerungseinrichtung und Batteriesteuerungsverfahren.
2.1. Die Erfindung bezieht sich auf eine Batterieladesteuerungseinrichtung zur Steuerung von Aufladevorgängen wiederaufladbarer Batterieeinheiten, wozu elektrische Energie von einer elektrischen Energiequelle bereitgestellt wird. Die Batterieladesteuerungseinrichtung umfasst eine Ladesteuereinheit (1), die einen an die Energiequelle ankoppelbaren Eingangsanschluss (1E) zur Zuführung eines Energieversorgungssignals (EVS) und eine Ausgangsanschlusskonfiguration mit einem oder mehreren parallelen Ausgangsanschlüssen (1A1, ..., 1An) zur Ankopplung einer Ladegerätanordnung aufweist, die eine oder mehrere Ladegeräte mit jeweils einem oder mehreren Ladeplätzen für die wiederaufladbaren Batterieeinheiten umfasst. Die Erfindung bezieht sich außerdem auf ein entsprechendes Batterieladesteuerungsverfahren.
2.2. Gemäß einem Aspekt der Erfindung ist die Ladesteuereinheit (1) dafür eingerichtet, den von der Energiequelle am Eingangsanschluss (1E) bereitgestellten Strom und/oder einen an einem jeweiligen Ausgangsanschluss (1A1, ..., 1An) bereitgestellten Strom zu überwachen und die Aktivierung eines Aufladevorgangs an einem jeweiligen Ladeplatz nur freizugeben, wenn der von der Energiequelle bereitgestellte Strom und/oder der von der Ladesteuereinheit (1) an dem betreffenden Ausgangsanschluss (1A1, ..., 1An) bereitgestellte Strom einen zugehörig vorgebbaren unteren Stromschwellwert nicht überschreitet, und/oder einen Aufladevorgang an einem jeweiligen Ladeplatz zu deaktivieren, wenn der von der Energiequelle bereitgestellte Strom und/oder der von der Ladesteuereinheit (1) an dem betreffenden Ausgangsanschluss (1A1, ..., 1An) bereitgestellte Strom einen zugehörig vorgebbaren oberen Stromschwellwert überschreitet.
2.3. Verwendung z.B. für Batterieladesysteme zum Laden von Akkupacks zur Energieversorgung von handgeführten Garten-, Forst-, Bau- und/oder Bodenbearbeitungsgeräten.

## Beschreibung

Die Erfindung bezieht sich auf eine Batterieladesteuerungseinrichtung zur Steuerung von Aufladevorgängen wiederaufladbarer Batterieeinheiten, wozu elektrische Energie von einer elektrischen Energiequelle bereitgestellt wird. Die Batterieladesteuerungseinrichtung umfasst eine Ladesteuereinheit, die einen an die Energiequelle ankoppelbaren Eingangsanschluss zur Zuführung eines Energieversorgungssignals und eine Ausgangsanschlusskonfiguration mit einem oder mehreren, insbesondere elektrisch parallelen, Ausgangsanschlüssen zur Ankopplung einer Ladegerätanordnung aufweist, die eine oder mehrere Ladegeräte mit jeweils einem oder mehreren Ladeplätzen für die wiederaufladbaren Batterieeinheiten umfasst. Die Erfindung bezieht sich außerdem auf ein entsprechendes Batterieladesteuerungsverfahren.

Batterieladesteuerungseinrichtungen und Batterieladesteuerungsverfahren dieser Art sind verschiedentlich bekannt und dienen dazu, vorzugsweise mehrere Batterieeinheiten in einer steuerbaren Weise elektrisch mit elektrischer Energie der Energiequelle aufzuladen. Die Batterieeinheiten können gleicher oder unterschiedlicher Bauart bzw. gleichen oder unterschiedlichen Typs sein und beispielsweise als sogenannte Akkupacks realisiert sein, wie sie üblicherweise zur Energieversorgung von diversen elektrisch angetriebenen Geräten benutzt werden. Bei diesen Geräten kann es sich z.B. um handgeführte Arbeitsgeräte, wie handgetragene oder bodengetragene Arbeitsgeräte bzw. Bearbeitungsgeräte im Bau- und Heimwerkerbereich, im Gartenbau und in der Forstwirtschaft handeln. Dazu weisen die Ladegeräte Ladeplätze auf, an denen die aufzuladenden Batterieeinheiten positioniert und geladen werden können. Jedes Ladegerät kann einen oder mehrere Ladeplätze aufweisen, und an die Ausgangsseite der Ladesteuereinheit kann pro Ausgangsanschluss je nach Bedarf und Anwendungsfall ein einzelnes Ladegerät oder eine Kaskade aufeinanderfolgender Ladegeräte angekoppelt werden.

Insbesondere im Fall von mehreren Ladegeräten bzw. mehreren Ladeplätzen besteht der Wunsch, gleichzeitige bzw. sich zeitlich überlappende Ladevorgänge an den Ladeplätzen derart ausführen zu können, dass einerseits das Energieliefervermögen der elektrischen Energiequelle bestmöglich genutzt wird und dadurch die Gesamtladezeiten minimiert werden, ohne dass andererseits die Energiequelle oder die elektrische Leitung zur Führung des Energieversorgungssignals überlastet wird. Bei der elektrischen Energiequelle kann es sich insbesondere um ein öffentliches Stromnetz oder um autarke, dezentrale Energieerzeuger handelt, wie u.a. Brennstoffzellen und Generatoren sowie regenerative Energieerzeuger in Form von Windkraftanlagen, Photovoltaikanlagen und Wasserkraftwerken.

Die Offenlegungsschrift EP 2 909 911 A1 offenbart ein Verfahren und eine Vorrichtung zum Übertragen von elektrischer Leistung zwischen einem Energieversorgungsnetz und einem Energieverbraucher, wie einer Antriebsbatterie eines Elektrofahrzeugs, oder einem Energieerzeuger, wie einem Photovoltaik- oder Windkraft-Wechselrichter, bei denen eine Überlastung oder eine Überversorgung des Energieversorgungsnetzes anhand einer geringfügigen Abweichung der Netzfrequenz von einer Nennfrequenz ermittelt wird, wie eine Abweichung um ca. 0,2Hz bis 0,5Hz von einer 50Hz-Nennfrequenz, und abhängig davon die Leistungsübertragung verändert wird.

Die Offenlegungsschrift EP 2 589 277 A1 offenbart ein Stromlasten-Managementsystem zum Laden von Batterien, bei dem mehrere elektrische Lasten, wie aufladbare Batterien, iterativ in Gruppen derart aufgeteilt werden, dass eine Summe gemessener Ströme der Lasten jeder Gruppe eine vorgegebene Stromgrenze nicht überschreitet, wobei die Stromgrenze durch Ankoppeln eines Stromsensors an einen ungeschalteten, speziell hierzu dienenden Energieausgang des Systems ermittelt wird.

Der Erfindung liegt als technisches Problem die Bereitstellung einer Batterieladesteuerungseinrichtung und eines Batterieladesteuerungsverfahrens der eingangs genannten Art zugrunde, die gegenüber dem oben erwähnten Stand der Technik weitergehende Verbesserungen bieten, insbesondere im Hinblick auf eine weiter optimierte Steuerung der vorzugsweise mehreren und ggf. gleichzeitig erfolgenden bzw. sich zeitlich überlappenden Aufladevorgänge an den vorzugsweise mehreren Ladeplätzen.

Die Erfindung löst dieses Problem durch die Bereitstellung einer Batterieladesteuerungseinrichtung mit den Merkmalen des Anspruchs 1 und eines Batterieladesteuerungsverfahrens mit den Merkmalen des Anspruchs 10. Vorteilhafte Weiterbildungen der Erfindung sind in den Unteransprüchen angegeben, deren Wortlaut hiermit durch Verweis zum Bestandteil der Beschreibung gemacht wird. Dies schließt insbesondere auch alle Ausführungsformen der Erfindung ein, die sich aus den Merkmalskombinationen ergeben, die durch die Rückbezüge in den Unteransprüchen definiert sind.

Wie bereits eingangs erwähnt, weist die Ladesteuereinheit der erfindungsgemäßen Batterieladesteuerungseinrichtung einen an die Energiequelle ankoppelbaren Eingangsanschluss zur Zuführung eines Energieversorgungssignals und eine Ausgangsanschlusskonfiguration mit einem oder vorzugsweise mehreren, d.h. zwei, drei, vier oder mehr Ausgangsanschlüssen zur Ankopplung einer Ladegerätanordnung auf, die eine oder mehrere Ladegeräte mit jeweils einem oder mehreren Ladeplätzen für die wiederaufladbaren Batterieeinheiten umfasst, wobei es sich insbesondere um elektrisch parallele Ausgangsanschlüsse handeln kann.

Gemäß einem ersten Aspekt der Erfindung ist die Ladesteuereinheit dafür eingerichtet, einen maximalen Stromlastzustand einer elektrischen Stromüberlastsicherung der Energiequelle zu erkennen und bei erkanntem maximalem Stromlastzustand der Stromüberlastsicherung den durch das Energieversorgungssignal von der Energiequelle über die Stromüberlastsicherung geführten Strom auf die Einhaltung des erkannten maximalen Stromlastzustands der Stromüberlastsicherung zu steuern.

Dieser Erfindungsaspekt eignet sich naturgemäß für die Ankopplung der Batterieladesteuerungseinrichtung an eine Energiequelle, die ausgangsseitig mit einer entsprechenden Stromüberlastsicherung ausgerüstet ist. Dabei kann es sich z.B. um einen Leitungsschutzschalter handeln, wie er z.B. vom A-, B- und C-Typ zur Absicherung von Hausanschlüssen bei öffentlichen Stromnetzen gebräuchlich ist. Mittel und Verfahren zur Erkennung des maximalen Stromlastzustands von elektrischen Stromüberlastsicherungen sind dem Fachmann verschiedentlich geläufig, abhängig von der Art der Stromüberlastsicherung. Indem die Einrichtung den maximalen Stromlastzustand selbst zu erkennen vermag, muss ihr diese Information nicht zugeführt werden, was gerade auch bei Verwendung der Batterieladesteuerungseinrichtung an unterschiedlichen Energiequellen mit unterschiedlichen maximalen Stromlastzuständen von Vorteil ist.

Gemäß einem zweiten Aspekt der Erfindung, der zusätzlich oder alternativ zum oben genannten ersten Aspekt in entsprechenden Ausführungen der Erfindung vorgesehen sein kann, ist die Ladesteuereinheit dafür eingerichtet, den von der Energiequelle am Eingangsanschluss bereitgestellten Strom und/oder einen an einem jeweiligen Ausgangsanschluss bereitgestellten Strom zu überwachen und die Aktivierung eines Aufladevorgangs an einem jeweiligen Ladeplatz freizugeben, wenn der von der Energiequelle bereitgestellte Strom und/oder der von der Ladesteuereinheit an dem betreffenden Ausgangsanschluss bereitgestellte Strom einen zugehörig vorgebbaren unteren Stromschwellwert nicht überschreitet, und/oder einen für einen Aufladevorgang an einem jeweiligen Ladeplatz bereitgestellten Strom zu reduzieren, wenn der von der Energiequelle bereitgestellte Strom und/oder der von der Ladesteuereinheit an dem betreffenden Ausgangsanschluss bereitgestellte Strom einen zugehörig vorgebbaren oberen Stromschwellwert überschreitet. Die Stromreduktion kann je nach Realisierung in einem bloßen Verringern des Stroms auf einen über null liegenden Stromstärkewert oder in einer Deaktivierung des Aufladevorgangs, d.h. einer Verringerung des Stroms auf den Wert null, bestehen.

Damit lassen sich Aufladevorgänge dahingehend optimieren, dass sie aktiviert werden, solange die damit verbundene eingangsseitige und/oder ausgangsseitige Stromstärke den unteren Stromschwellwert nicht überschreitet, der zu diesem Zweck geeignet vorgegeben werden kann und anzeigt, dass noch Stromreserven vorhanden sind, und/oder dass sie in ihrem Ladestrom verringert oder gänzlich deaktiviert werden, sobald die betreffende Stromstärke den oberen Stromschwellwert überschreitet, was eine Überlastsituation repräsentiert, wozu wiederum der obere Stromschwellwert geeignet vorgegeben werden kann.

In einer entsprechenden Realisierung der Erfindung ist der untere Stromschwellwert abhängig von dem oberen Stromschwellwert vorgebbar, vorzugsweise kleiner als der obere Stromschwellwert. Insbesondere kann der untere Stromschwellwert zu Beginn einer Aufladesequenz, wie zum Zeitpunkt des Ankoppeln an die Energiequelle, mindestens 2A und höchstens 4A kleiner vorgegeben sein als der obere Stromschwellwert.

In einer Weiterbildung der Erfindung ist die Ladesteuereinheit dafür eingerichtet, eine Signalstärke eines in einem vorgebbaren Überwachungsfrequenzbereich liegenden Frequenzanteils einer Wechselspannung und/oder eines Wechselstroms des Energieversorgungssignals der Energiequelle zu ermitteln und auf das Vorliegen des maximalen Stromlastzustands der Stromüberlastsicherung zu erkennen, wenn die Signalstärke um ein vorgebbares Maß über einer Normalsignalstärke liegt, wobei der Überwachungsfrequenzbereich oberhalb von 10kHz liegt, insbesondere oberhalb von 25kHz und/oder unterhalb von 150kHz. Das vorgebbare Maß an Signalstärkenüberhöhung im genannten Frequenzbereich kann z.B. etwa 3dB betragen.

Das Erkennen des maximalen Stromlastzustands der Stromüberlastsicherung auf diese Weise ist insbesondere für Fälle tauglich, bei denen die Stromüberlastsicherung wie oben bereits erwähnt aus einem Leitungsschutzschalter z.B. vom A-, B- oder C-Typ besteht. Denn diese Leitungsschutzschalter zeigen, wie dem Fachmann an sich bekannt, bei Annäherung an Ihren Ansprechpunkt ein lichtbogenartiges Verhalten der über ihr anliegenden Wechselspannung und/oder des über sie geführten Wechselstroms, wobei dieses Verhalten insbesondere eine deutliche Signalanhebung im besagten Frequenzbereich über 10kHz, insbesondere z.B. zwischen 30kHz und 140kHz verursacht. Vorteilhaft kann die Einrichtung folglich mit dieser Maßnahme die Annäherung des über die Stromüberlastsicherung geführten Stroms, insbesondere aber nicht zwingend ausschließlich des für die Aufladevorgänge benutzten Stroms, an die Belastungsgrenze der Stromüberlastsicherung selbsttätig erkennen.

In einer Weiterbildung der Erfindung ist die Ladesteuereinheit dafür eingerichtet, einen oder mehrere Aufladevorgänge nur bis zum Erreichen des maximalen Stromlastzustands der Stromüberlastsicherung freizugeben. Damit stellt die Ladesteuereinheit sicher, dass die Stromüberlastsicherung durch die Aktivierung von Aufladevorgängen nicht überlastet wird.

In einer Weiterbildung der Erfindung ist die Ladesteuereinheit dafür eingerichtet, den unteren Stromschwellwert um ein vorgebbares Stromreduktionsinkrement zu reduzieren, wenn der von der Energiequelle bereitgestellte Strom und/oder der von der Ladesteuereinheit an dem betreffenden Ausgangsanschluss bereitgestellte Strom den oberen Stromschwellwert überschreitet. Mit dieser Ausführung der Ladesteuereinheit kann eine Hysterese bezüglich des Deaktivierens und Wiederaktivierens eines betreffenden Aufladevorgangs bereitgestellt werden, die einem in der Regel unerwünschten raschen zyklischen Wechsel von Aktivierung und Deaktivierung des Aufladevorgangs entgegenwirkt.

In entsprechenden Ausführungen ist die Ladesteuereinheit dafür eingerichtet, den unteren Stromschwellwert wiederholt, insbesondere mehrfach wiederholt, um ein vorgebbares Stromreduktionsinkrement zu reduzieren.

In einer Ausgestaltung der Erfindung ist das Stromreduktionsinkrement auf einen Wert zwischen 1A und 5A, insbesondere zwischen mindestens 2A und höchstens 4A, vorgebbar. Diese Ausführung eignet sich z.B. in aller Regel gut für Energiequellen, die auf eine maximale Dauerstromstärke in der Größenordnung von 16A ausgelegt sind.

In einer Ausgestaltung der Erfindung ist die Ladesteuereinheit dafür eingerichtet, den zuvor um das vorgebbare Stromreduktionsinkrement reduzierten unteren Stromschwellwert um ein vorgebbares Stromerhöhungsinkrement anzuheben, wenn der von der Energiequelle bereitgestellte Strom und/oder der von der Ladesteuereinheit an dem betreffenden Ausgangsanschluss bereitgestellte Strom den oberen Stromschwellwert während einer vorgebbaren Ladeüberwachungszeit nicht überschreitet. Mit dieser Ausführung der Ladesteuereinheit kann der zuvor zur Bereitstellung der gewünschten Hysterese bezüglich des Deaktivierens und Wiederaktivierens eines betreffenden Aufladevorgangs verringerte untere Stromschwellwert wieder angehoben werden, sobald dies situativ günstig ist. Die Ladeüberwachungszeit wird dazu geeignet festgelegt, um sicherzustellen, dass der Ladestrom nicht mehr weiter über den oberen Stromschwellwert hinaus ansteigt. In entsprechenden Realisierungen kann vorgesehen sein, für diese Stromüberwachung eine gleiche Aufladekonfiguration vorauszusetzen, d.h. dass die gleichen Aufladevorgänge über die gleichen Ausgangsanschlüsse aktiviert sind, wie zum Zeitpunkt der Reduktion des unteren Stromschwellwerts, d.h. nachdem ein Aufladevorgang an einem betreffenden Ladeplatz, der zuvor wegen Überschreitung des oberen Stromschwellwerts durch den von der Energiequelle bereitgestellten Strom und/oder den von der Ladesteuereinheit an dem betreffenden Ausgangsanschluss bereitgestellten Strom deaktiviert wurde, wieder aktiviert worden ist.

In einer Ausgestaltung der Erfindung ist das Stromerhöhungsinkrement auf einen Wert zwischen 1A und 5A, insbesondere zwischen mindestens 2A und höchstens 4A, und/oder auf den gleichen Wert wie das Stromreduktionsinkrement vorgebbar. Diese Ausführung ist vorteilhaft an die Wahl des Stromreduktionsinkrements angepasst, wobei das Stromerhöhungsinkrement je nach Bedarf und Anwendungsfall gleich groß wie das Stromreduktionsinkrement gewählt sein kann oder gegenüber diesem kleiner oder größer. Insbesondere kann das Stromerhöhungsinkrement so vorgegeben sein, dass ein zu Beginn einer Aufladesequenz ermittelter oder vorgegebener Anfangswert des zwischenzeitlich reduzierten unteren Stromschwellwertes wieder erreicht wird.

In entsprechenden Realisierungen der Erfindung ist statt oder zusätzlich zu einer eingangsseitigen Stromerfassung am Eingangsanschluss der Ladesteuereinheit eine ausgangsseitige Stromerfassung am jeweiligen Ausgangsanschluss vorgesehen. In diesen Fällen kann das Stromerhöhungsinkrement für den betreffenden Ausgangsanschluss individuell dem an diesem Ausgangsanschluss bereitgestellten, erfassten Strom entsprechend gewählt werden. Dabei kann der untere Stromschwellwert und/oder das Stromerhöhungsinkrement vorzugsweise für die verschiedenen Ausgangsanschlüsse verschieden gewählt werden.

In einer Weiterbildung der Erfindung ist die Ladesteuereinheit dafür eingerichtet, eine Unterschreitung der Spannung des Energieversorgungssignals um ein vorgebbares Unterschreitungsmaß unter einen vorgebbaren Spannungsmindestsollwert für eine vorgebbare Unterschreitungs-Mindestzeitdauer zu erkennen und daraufhin den oberen Stromschwellwert um ein vorgebbares Stromabsenkinkrement abzusenken. Diese vorzugsweise zyklisch wiederholt ausgeführte Erkennung eignet sich insbesondere für Energiequellen mit relativ stark schwankender Leistungsabgabe und insbesondere schwankendem Stromliefervermögen, wie dies z.B. bei Windkraftanlagen und Photovoltaikanlagen der Fall ist, und ermöglicht eine optimierte Leistungsabgabeanpassung.

In einer Ausgestaltung der Erfindung ist der Spannungsmindestsollwert auf einen Wert zwischen 206V und 208V, insbesondere auf 207V, vorgebbar und/oder das Unterschreitungsmaß auf einen Wert zwischen 1V und 2V vorgebbar ist und/oder die Unterschreitungs-Mindestzeitdauer auf einen Wert zwischen 9ms und 11ms, insbesondere auf 10ms, vorgebbar, und/oder das Stromabsenkinkrement ist auf einen Wert zwischen 1A und 4A, insbesondere auf 2A, vorgebbar. Diese Werte eignen sich insbesondere für eine Energiequelle mit einer Nennspannung von 220V bis 230V.

In einer Weiterbildung der Erfindung ist die Ladesteuereinheit dafür eingerichtet, eine Überschreitung der Spannung des Energieversorgungssignals um ein vorgebbares Überschreitungsmaß über einen oder den vorgebbaren Spannungsmindestsollwert für eine vorgebbare Überschreitungs-Mindestzeitdauer zu erkennen und daraufhin den oberen Stromschwellwert um ein vorgebbares Stromanhebeinkrement anzuheben. Diese vorzugsweise zyklisch wiederholt ausgeführte Erkennung eignet sich wiederum insbesondere für Energiequellen mit schwankender Leistungsabgabe und insbesondere schwankendem Stromliefervermögen, wie dies z.B. bei Windkraftanlagen und Photovoltaikanlagen der Fall ist, und ermöglicht eine optimierte Leistungsabgabeanpassung, indem eine eventuell zuvor erfolgte Absenkung des oberen Stromschwellwertes wieder ganz oder teilweise rückgängig gemacht werden kann, sobald dies nicht mehr zu einem unerwünschten Spannungseinbruch führt.

In einer Ausgestaltung der Erfindung ist der Spannungsmindestsollwert auf einen Wert zwischen 206V und 208V, insbesondere auf 207V, vorgebbar und/oder das Überschreitungsmaß ist auf einen Wert zwischen 1V und 2V vorgebbar und/oder die Überschreitungs-Mindestzeitdauer ist auf einen Wert zwischen 9ms und 11ms, insbesondere auf 10ms, vorgebbar und/oder das Stromanhebeinkrement ist auf einen Wert zwischen 1A und 4A, insbesondere auf 2A, vorgebbar. Wie zuvor erläutert, eignen sich auch in diesem Fall diese Werte insbesondere für eine Energiequelle mit einer Nennspannung von 220V-240V, z.B. 230V.

In einer Weiterbildung der Erfindung weist die Ladesteuereinheit Ladepriorisierungsinformationen auf, von denen abhängig sie die Aktivierung eines jeweiligen Ladevorgangs initiiert, wobei die Ladepriorisierungsinformationen eine Ausgangsanschluss-Prioritätsinformation und/oder eine Ladeplatz-Prioritätsinformation und/oder eine Ladezustands-Prioritätsinformation und/oder eine Ladevorgabe-Prioritätsinformation umfassen. Die Ausgangsanschluss-Prioritätsinformation legt fest, welche Priorität die Aktivierung eines Aufladevorgangs über den jeweiligen Ausgangsanschluss der Ladesteuereinheit hat. In einer entsprechenden Ausführungsform ist die Ausgangsanschluss-Prioritätsinformation insbesondere abhängig von in der Batterieeinheit gespeicherten Ladevorgaben, die über eine entsprechende Schnittstelle, beispielsweise ein Smartphone, durch einen Benutzer vorgegeben werden. Die Ladeplatz-Prioritätsinformation legt fest, welche Priorität die Aktivierung eines Aufladevorgangs am jeweiligen Ladeplatz der Ladesteuereinheit hat. Die Ladezustands-Prioritätsinformation legt fest, welche Priorität die Aktivierung eines Aufladevorgangs für eine an einem Ladeplatz angeordnete Batterieeinheit mit einem zugehörigen Ladezustand hat, z.B. eine höhere Priorität für eine Batterieeinheit mit geringerem Ladezustand gegenüber einer Batterieeinheit mit höherem Ladezustand an einem anderen Ladeplatz. Die Ladevorgabe-Prioritätsinformation legt fest, welche Priorität die Aktivierung eines Aufladevorgangs für eine an einem Ladeplatz angeordnete Batterieeinheit abhängig von einer für diesen Ladeplatz oder diese Batterieeinheit vorliegende Ladevorgabe hat, z.B. eine höhere Priorität für eine kurzfristig benötigte und daher schnell aufzuladende Batterieeinheit.

Die Ladesteuereinheit priorisiert abhängig der Ladevorgaben, die durch den Benutzer in der Batterieeinheit hinterlegt wurden, den Ladevorgang

Das erfindungsgemäße Batterieladesteuerungsverfahren kann insbesondere von der erfindungsgemäßen Batterieladesteuerungseinrichtung ausgeführt werden und weist die hierzu korrespondierenden Vorteile und Wirkungen der erfindungsgemäßen Batterieladesteuerungseinrichtung auf, wie sie oben erläutert sind.

Vorteilhafte Ausführungsformen der Erfindung sind in den Zeichnungen dargestellt. Diese und weitere Ausführungsformen der Erfindung werden nachfolgend näher erläutert. Hierbei zeigen:
Fig. 1 eine schematische Blockdiagrammdarstellung einer Batterieladesteuerungseinrichtung mit Ladesteuereinheit mit nur eingangsseitiger Strommessung,
Fig. 2 eine schematische Blockdiagrammdarstellung einer Batterieladesteuerungseinrichtung mit Ladesteuereinheit mit eingangsseitiger und ausgangsseitiger Strommessung,
Fig. 3 ein Signalstärke-Frequenz-Diagramm zur Veranschaulichung einer Erkennung eines maximalen Stromlastzustands einer Stromüberlastsicherung,
Fig. 4 ein schematisches Blockdiagramm eines Teils der Ladesteuereinheit zur Erkennung des maximalen Stromlastzustands der Stromüberlastsicherung,
Fig. 5 ein Stromstärke-Zeit-Diagramm zur Veranschaulichung einer Aufladesequenz der Ladesteuereinheit,
Fig. 6 ein Stromstärke-Zeit-Diagramm zur Veranschaulichung einer Aufladesequenz der Ladesteuereinheit mit Überschreitung eines oberen Stromschwellwertes,
Fig. 7 ein Stromstärke-Zeit-Diagramm zur Veranschaulichung einer Aufladesequenz der Ladesteuereinheit mit Absenkung und Wiederanhebung eines unteren Stromschwellwertes und
Fig. 8 ein Flussdiagramm zur Veranschaulichung einer Anpassung eines oberen Stromschwellwertes an eine schwankende Versorgungsspannung durch die Ladesteuereinheit.

In den Figuren ist die erfindungsgemäße Batterieladesteuerungseinrichtung in verschiedenen Ausführungen und mit unterschiedlichen implementierten Funktionalitäten illustriert. Die Batterieladesteuerungseinrichtung dient zur Steuerung von elektrischen Aufladevorgängen elektrisch wiederaufladbarer Batterieeinheiten, wozu elektrische Energie von einer elektrischen Energiequelle bereitgestellt wird. Bei den Batterieeinheiten kann es sich um beliebige elektrisch wiederaufladbare Batterieeinheiten herkömmlicher Art handeln, beispielsweise um Akkupacks zur Energieversorgung akkubetriebener, hand- oder bodengetragener Arbeits- und Bearbeitungsgeräte im Bau- und Heimwerkerbereich, im Gartenbau und in der Forstwirtschaft. Die für die Aufladevorgänge erforderliche elektrische Energie wird in üblicher Weise von der elektrischen Energiequelle bereitgestellt, bei der es sich insbesondere um ein öffentliches Stromnetz oder um einen autarken, dezentralen Energieerzeuger handeln kann, wie z.B. ein Brennstoffzellensystem, ein Generator, eine Windkraftanlage, eine Photovoltaikanlage oder ein Wasserkraftwerk.

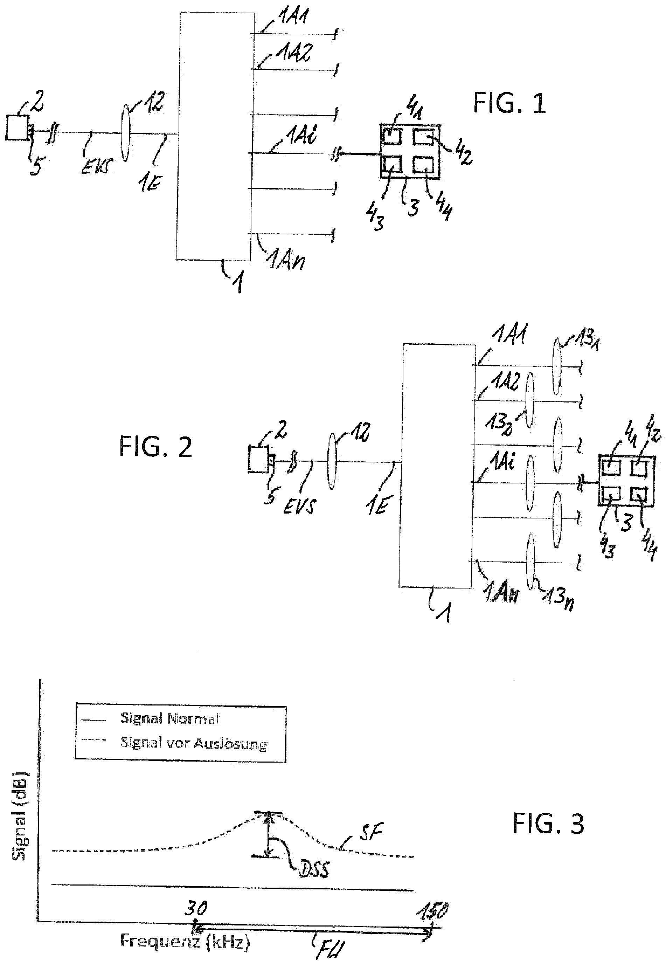

Wie in den Fig. 1 und 2 zu erkennen, beinhaltet die Batterieladesteuerungseinrichtung eine Ladesteuereinheit 1, die einen an die Energiequelle ankoppelbaren Eingangsanschluss 1E zur Zuführung eines Energieversorgungssignals EVS aufweist. Zur Illustration ist in den Fig. 1 und 2 diese Ankopplung des Eingangsanschlusses 1E der Ladesteuereinheit 1 an eine Energiequelle 2 schematisch angedeutet, die von einem beliebigen der erwähnten Energiequellentypen sein kann und das Energieversorgungssignal EVS liefert. Es versteht sich, dass je nach Bedarf und Anwendungsfall die Ladesteuereinheit 1 über den erwähnten Eingangsanschluss 1E auch an eine oder mehrere zusätzliche Energiequellen angekoppelt sein kann und/oder einen oder mehrere weitere Eingangsanschlüsse zur Ankopplung an eine oder mehrere weitere Energiequellen aufweisen kann.

Ausgangsseitig weist die Ladesteuereinheit 1 eine Ausgangsanschlusskonfiguration mit einem oder mehreren, vorzugsweise elektrisch parallelen Ausgangsanschlüssen zur Ankopplung einer Ladegerätanordnung auf. Die Fig. 1 und 2 veranschaulichen eine Ausführung der Ladesteuereinheit 1 mit einer Anzahl n von derartigen Ausgangsanschlüssen 1A1, 1A2, ..., 1An, mit n als einer beliebigen natürlichen Zahl größer oder gleich eins. Die Ladegerätanordnung umfasst in einer üblichen und daher hier nicht weiter gezeigten und zu erläuternden Weise ein oder mehrere Ladegeräte mit jeweils einem oder mehreren Ladeplätzen für die wiederaufladbaren Batterieeinheiten. Derartige Ladegeräte sind in verschiedenen Ausführungen bekannt, z.B. in Form von Einfach-Ladegeräten mit nur einem Ladeplatz für einen zwecks Aufladung dort platzierbaren Akkupack oder in Form von Mehrfach-Ladegeräten mit mehreren derartigen Akkupack-Ladeplätzen, die vom Ladegerät je nach Ausführung und Bedarf gleichzeitig oder sequenziell zur Durchführung entsprechender Aufladevorgänge mit Ladestrom versorgt werden können.

Es versteht sich, dass je nach Bedarf und Systemauslegung an den jeweiligen j-ten Ausgangsanschluss 1Aj, 1≤j≤n, ein einziges Ladegerät oder mehrere Ladegeräte parallel und/oder in Reihe kaskadiert angekoppelt werden können. Lediglich exemplarisch und stellvertretend ist in den Fig. 1 und 2 die Ankopplung eines Ladegeräts 3 mit vier Akkupack-Ladeplätzen 4₁, 4₂, 4₃, 4₄ an einen i-ten Ausgangsanschluss 1Ai der Ladesteuereinheit 1 illustriert. Es sei an dieser Stelle erwähnt, dass sich die erfindungsgemäße Batterieladesteuerungseinrichtung insbesondere auch für Anwendungen eignet, bei denen die Ladegerätanordnung eine relativ große Anzahl von Ladegeräten, seien es Einfach-Ladegeräte mit je einem Ladeplatz und/oder Mehrfach-Ladegeräte mit jeweils mehreren Ladeplätzen, umfasst. Die Ladegerätanordnung kann sich z.B. in einer Werkstatt oder einem anderen stationären Umfeld, in welchem batteriebetriebene Geräte zum Einsatz kommen, oder alternativ in einer mobilen Umgebung, wie einem Transporterfahrzeug oder dergleichen, befinden, um eine entsprechend große Anzahl von Batterieeinheiten gegebenenfalls gleichzeitig aufladen zu können.

Eine Grundidee der erfindungsgemäßen Batterieladesteuerungseinrichtung besteht darin, die Aufladevorgänge derart zu steuern, dass zu jedem Zeitpunkt möglichst viele angeforderte Aufladevorgänge durchgeführt werden können und/oder die jeweiligen Aufladevorgänge mit möglichst optimal hoher Aufladeleistung durchgeführt werden können, ohne dass unerwünschte Stromüberlasteffekte auftreten, wie eine zu hohe Strombelastung der das Energieversorgungssignal EVS zuführenden elektrischen Leitung.

Es versteht sich, dass bei Bedarf mehrere Exemplare der erfindungsgemäßen Batterieladesteuerungsvorrichtung bzw. deren Ladesteuereinheiten 1 Bestandteile eines übergeordneten, datenvernetzten Batterieladesystems sein können, das zusätzlich zu den mehreren Batterieladesteuerungseinrichtungen bzw. Ladesteuereinheiten 1 beispielsweise ein Cloud-Backend z.B. mit Datenbanken, ein oder mehrere Frontend-Einheiten, die für einen Zugriff mittels üblicher Benutzer-Endgeräte eingerichtet sind und mit dem Backend in Kommunikationsverbindung stehen, sowie ebenfalls mit dem Backend in Kommunikationsverbindung stehende nutzerseitige Endgeräte, wie Smartphones, umfasst. Über eine geeignete Zwischenstation, wie ein Gateway oder einen WLAN-Router, stehen die Batterieladesteuerungseinrichtungen bzw. Ladesteuereinheiten 1 mit dem Backend in Kommunikationsverbindung. Hierbei können auch mehrere Zwischenstationen vorgesehen sein, und die jeweilige Zwischenstation kann bei Bedarf auch für kurzreichweitige Kommunikation z.B. via Bluetooth ausgelegt sein.

In einer vorteilhaften Ausführungsform ist die Ladesteuereinheit 1 dafür eingerichtet, einen maximalen Stromlastzustand einer elektrischen Stromüberlastsicherung der Energiequelle zu erkennen und bei erkanntem maximalem Stromlastzustand der Stromüberlastsicherung den durch das Energieversorgungssignal EVS von der Energiequelle über die Stromüberlastsicherung geführten Strom auf die Einhaltung des maximalen Stromlastzustands der Stromüberlastsicherung zu steuern. Lediglich zu Illustrationszwecken ist in den Fig. 1 und 2 schematisch eine solche elektrische Stromüberlastsicherung 5 angedeutet, über die das Energieversorgungssignal EVS geleitet wird. Die Stromüberlastsicherung kann hierbei von einem üblichen Typ sein, insbesondere ein Leitungsschutzschalter vom A-, B- oder C-Typ, wie er beispielsweise mit einer maximalen Strombelastbarkeit im Bereich von 12A bis 20A gängig ist. Es sei an dieser Stelle erwähnt, dass vorliegend wie üblich der Begriff Strom auch synonym zum Begriff Stromstärke verwendet wird.

In vorteilhaften Ausführungen ist die Ladesteuereinheit 1 dafür eingerichtet, eine Signalstärke SF eines in einem vorgebbaren Überwachungsfrequenzbereich FU liegenden Frequenzanteils einer Wechselspannung und/oder eines Wechselstroms des Energieversorgungssignals EVS der Energiequelle zu ermitteln und auf das Vorliegen des maximalen Stromlastzustands der Stromüberlastsicherung zu erkennen, wenn die Signalstärke SF um ein vorgebbares Maß DSS über einer Normalsignalstärke liegt, wobei der Überwachungsfrequenzbereich FU oberhalb von 10 kHz liegt. Fig. 3 veranschaulicht diese Funktionalität der Ladesteuereinheit 1 in dieser Realisierung. Speziell liegt der Überwachungsfrequenzbereich FU in diesem Beispiel oberhalb von 25kHz und/oder unterhalb von 150kHz, z.B. zwischen ca. 30kHz und ca. 140kHz. Das vorgebbare Übermaß DSS an Signalstärke kann z.B. im Bereich von 3dB bis 12dB liegen, wie bei ca. 3dB oder zwischen 6dB und 8dB.

Diese Systemauslegung ist insbesondere zur Erkennung des maximalen Stromlastzustands der Stromüberlastsicherung geeignet, wenn letztere ein Leitungsschutzschalter ist. Denn derartige Stromüberlastsicherungen haben üblicherweise die Eigenschaft, dass sie bei Annäherung an ihren maximalen Stromlastzustand ein lichtbogenartiges Verhalten zeigen, das u.a. die Wirkung hat, dass die Signalstärke SF des Frequenzanteils der Wechselspannung und/oder des Wechselstroms des Energieversorgungssignals EVS in dem besagten Überwachungsfrequenzbereich FU signifikant ansteigt, was sich darin äußert, dass das Frequenzspektrum der Wechselspannung und/oder des Wechselstroms in diesem Frequenzbereich das besagte Überhöhungsmaß DSS ausbildet. Es versteht sich, dass ein entsprechender Signalstärkeanstieg auch im Frequenzbereich zugehöriger Oberwellen vorliegen kann.

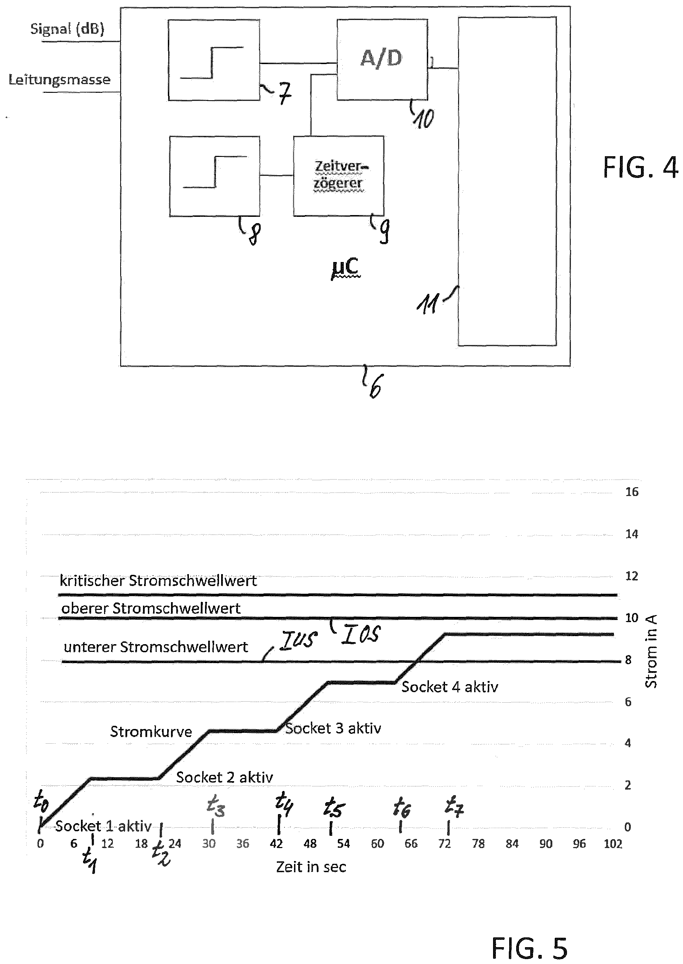

Fig. 4 veranschaulicht schematisch eine mögliche Realisierung eines Teils 6 der Ladesteuereinheit 1, mit dem diese in der Lage ist, die erwähnte Erkennung des maximalen Stromlastzustands der Stromüberlastsicherung vorzunehmen. Dazu besitzt dieser Teil 6 der Ladesteuereinheit 1, wie gezeigt, je einen Anschluss für eine Leitungsmasse und für das zu detektierende Frequenzsignal gemäß Fig. 3, eine Signalerhöhungseinheit 7, eine Signalmittelwerteinheit 8, eine Zeitverzögerungseinheit 9, einen Analog/Digital-Wandler 10 und einen Digitalteil 11. Die Signalerhöhungseinheit 7 erfasst eine Signalerhöhung um das vorgebbare Maß DSS, und der Analog/Digital-Wandler 10 vergleicht das ihm von der Signalerhöhungseinheit 7 zugeführte Eingangssignal mit einem von den Einheiten 8 und 9 gelieferten Signalmittelwert und gibt ein entsprechendes Ausgangssignal an den Digitalteil 11 ab, über den dann ausgegeben wird, ob die Signalstärke SF im betreffenden Frequenzbereich FU um das vorgebbare Maß DSS angestiegen ist und daher der maximale Stromlastzustand der Stromüberlastsicherung vorliegt oder nicht. Wie ebenfalls in Fig. 4 angedeutet, kann dieser Teil 6 der Ladesteuereinheit 1 z.B. durch eine Mikroprozessoreinheit realisiert bzw. in Software und/oder Hardware in dieser implementiert sein.

Zweckmäßigerweise ist die Ladesteuereinheit 1 weitergehend dafür eingerichtet, einen oder mehrere Aufladevorgänge nur bis zum erkannten Erreichen des maximalen Stromlastzustands der Stromüberlastsicherung freizugeben. Sobald die Ladesteuereinheit 1 erkennt, dass die Stromüberlastsicherung ihren maximalen Stromlastzustand zu erreichen oder zu überschreiten droht, aktiviert die Ladesteuereinheit 1 keinen weiteren Aufladevorgang und/oder deaktiviert einen oder mehrere laufende Aufladevorgänge, wodurch vermieden wird, dass die Stromüberlastsicherung anspricht und die Zuführung des Energieversorgungssignals EVS von der Energiequelle zur Ladesteuereinheit 1 unterbricht.

In vorteilhaften Ausführungsformen ist die Ladesteuereinheit 1 dafür eingerichtet, den von der Energiequelle am Eingangsanschluss 1E bereitgestellten Strom und/oder einen an einem jeweiligen des oder der Ausgangsanschlüsse 1A1, ..., 1An bereitgestellten Strom zu überwachen und die Aktivierung eines Aufladevorgangs an einem jeweiligen Ladeplatz freizugeben, wenn der von der Energiequelle bereitgestellte Strom bzw. der von der Ladesteuereinheit 1 an dem betreffenden Ausgangsanschluss 1A1, ..., 1An bereitgestellte Strom einen zugehörig vorgebbaren unteren Stromschwellwert IUS nicht überschreitet, und/oder einen Aufladevorgang an einem jeweiligen Ladeplatz zu deaktivieren oder in seiner Ladestromstärke zu reduzieren, wenn der von der Energiequelle bereitgestellte Strom und/oder der von der Ladesteuereinheit 1 an dem betreffenden Ausgangsanschluss 1A1, ..., 1An bereitgestellte Strom einen zugehörig vorgebbaren oberen Stromschwellwert IOS überschreitet. Vorzugsweise gibt die Ladesteuereinheit die Aktivierung des Aufladevorgangs an dem jeweiligen Ladeplatz nur dann frei, wenn der von der Energiequelle bereitgestellte Strom bzw. der von der Ladesteuereinheit 1 an dem betreffenden Ausgangsanschluss 1A1, ..., 1An bereitgestellte Strom den zugehörig vorgegebenen unteren Stromschwellwert IUS nicht überschreitet.

Die konkrete Ausführung der Ladesteuereinheit 1 in dieser Hinsicht ist unter anderem davon abhängig, welche Strommessfunktionalität für die Batterieladesteuerungseinrichtung implementiert ist. So zeigt Fig. 1 ein Ausführungsbeispiel mit nur eingangsseitiger Strommessung, in Fig. 1 schematisch durch eine eingangsseitige Strommesseinheit 12 veranschaulicht. Fig. 2 zeigt ein Ausführungsbeispiel, bei dem zusätzlich zur eingangsseitigen Strommessung auch eine ausgangsseitige Strommessung individuell für jeden Ausgangsanschluss 1A1, ..., 1An implementiert ist, in Fig. 2 durch eine jeweilige Strommesseinheit 13₁ bis 13ₙ veranschaulicht. In weiteren, nicht gezeigten Ausführungen ist die Strommessung der Ladesteuereinheit 1 nur ausgangsseitig implementiert, d.h. am jeweiligen Ausgangsanschluss 1A1, ..., 1An. Die eingangsseitige Strommessung ist vorzugsweise als Messung des absoluten Stroms, d.h. des Wirkleistungsstroms, realisiert, wenn wie in den meisten Fällen das Energieversorgungssignal EVS ein Wechselspannung/Wechselstrom-Signal ist, z.B ein Wechselspannung/Wechselstrom-Signal eines öffentlichen Stromnetzes mit einer Nennspannung von 230V und einer Frequenz von 50Hz.

Die Variante mit ausgangsseitiger Strommessung erfordert gegenüber der eingangsseitigen Strommessung höheren Aufwand, insbesondere bei einer relativ großen Anzahl n von Ausgangsanschlüssen 1A1, ..., 1An, ermöglicht dafür jedoch eine flexiblere Anpassung der Aufladevorgänge an die jeweilige Stromversorgungssituation.

Fig. 5 veranschaulicht eine Aufladesequenz, wie sie von der Ladesteuereinheit 1 in entsprechender Realisierung ausführbar ist, wobei sich dies insbesondere auf eine Ausführungsform mit eingangsseitiger Strommessung beziehen kann. Zu einem Zeitpunkt t₀ aktiviert die Ladesteuereinheit 1 einen Aufladevorgang für einen ersten (Socket 1) der Ausgangsanschlüsse 1A1, ..., 1An, wobei der betreffende Ausgangsanschluss 1A1, ..., 1An hier und im Folgenden auch als Socket bezeichnet ist, d.h. die jeweilige Batterieeinheit wird beispielsweise im Fall der Ankopplung von Einfach-Ladegeräten zum Laden an einem Ladeplatz desjenigen Ladegerätes positioniert, das mit diesem Ausgangsanschluss gekoppelt ist. Daraufhin steigt der Ladestrom und damit der eingangsseitig der Ladesteuereinheit 1 am Eingangsanschluss 1E zugeführte Strom bis zu einem Zeitpunkt t₁ an, ab dem er dann zunächst konstant bleibt. Zu einem Zeitpunkt t₂ aktiviert die Ladesteuereinheit 1 zusätzlich einen Aufladevorgang an einem zweiten (Socket 2) der Ausgangsanschlüsse 1A1, ..., 1An. Wiederum steigt die Stromkurve für den am Eingangsanschluss 1E der Ladesteuereinheit 1 zugeführten Strom bis zu einem Zeitpunkt t₃ an, um anschließend wieder konstant zu bleiben. Zu einem Zeitpunkt t₄ aktiviert die Ladesteuereinheit 1 zusätzlich einen dritten Aufladevorgang an einem dritten (Socket 3) der Ausgangsanschlüsse 1A1, ..., 1An, so dass erneut der eingangsseitige Strom bis zu einem Zeitpunkt t₅ ansteigt und dann konstant bleibt. Zu einem Zeitpunkt t₆ aktiviert die Ladesteuereinheit 1 zusätzlich einen vierten Aufladevorgang an einem vierten (Socket 4) der Ausgangsanschlüsse 1A1, ..., 1An, so dass der Eingangsstrom wiederum bis zu einem Zeitpunkt t₇ ansteigt, um dann wieder konstant zu bleiben.

Wie aus Fig. 5 ersichtlich, übersteigt der eingangsseitig gemessene Strom während des Anstiegs des Ladestroms für den vierten Aufladevorgang den zugehörig vorgegebenen unteren Stromschwellwert IUS. Als Folge davon gibt die Ladesteuereinheit 1 keine Aktivierung eines weiteren Aufladevorgangs mehr frei, solange der von der Energiequelle bereitgestellte Strom nicht wieder unter den unteren Stromschwellwert IUS gefallen ist. In diesem Fall ist das Optimum von vier gleichzeitigen Aufladevorgängen erreicht, und der hierfür von der Energiequelle bereitgestellte Strom liegt zwischen dem unteren Stromschwellwert IUS und dem zugehörig vorgegebenen oberen Stromschwellwert IOS.

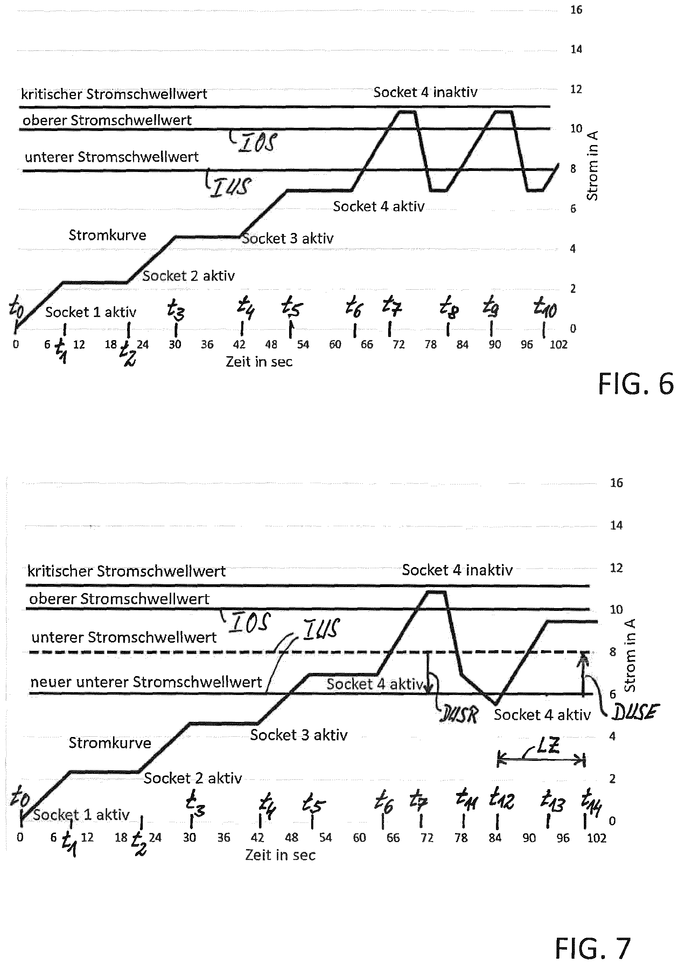

Fig. 6 zeigt eine gegenüber Fig. 5 modifizierte Aufladesequenz durch die Ladesteuereinheit 1. Der Verlauf der Stromkurve für den von der Energiequelle für die Aufladevorgänge bereitgestellten Strom, den die Ladesteuereinheit 1 am Eingangsanschluss 1E empfängt, entspricht bis zum Zeitpunkt t₆ der Aktivierung des vierten Aufladevorgangs am vierten Ausgangsanschluss (Socket 4) derjenigen von Fig. 5, so dass insoweit auf deren obige Erläuterungen verwiesen werden kann. Jedoch steigt nun der von der Energiequelle gelieferte Strom des Energieversorgungssignals EVS über den oberen Stromschwellwert IOS hinaus an, bevor er zum Zeitpunkt t₇ wieder konstant bleibt.

Diese Überschreitung des oberen Stromschwellwerts IOS erkennt die Ladesteuereinheit 1 als unerwünscht hohe Strombelastung, weshalb sie den vierten Aufladevorgang am vierten Ausgangsanschluss (Socket 4) wieder deaktiviert. Der Strom des eingangsseitigen Energieversorgungssignals EVS fällt daraufhin wieder auf den vormaligen Stromwert für den ersten bis dritten Aufladevorgang unter den unteren Stromschwellwert IUS ab. Dies hat zur Folge, dass die Ladesteuereinheit 1 zu einem entsprechenden Zeitpunkt t₈ den vierten Aufladevorgang wieder aktiviert, wodurch die betreffende Stromkurve zu einem Zeitpunkt t₉ wieder über den oberen Stromschwellwert IOS ansteigt. Die Ladesteuereinheit 1 deaktiviert daraufhin wieder den vierten Aufladevorgang, so dass der eingangsseitige Ladestrom wieder unter den unteren Stromschwellwert IUS abfällt und die Ladesteuereinheit 1 periodisch zu einem Zeitpunkt t₁₀ wieder den vierten Aufladevorgang aktiviert. Das Deaktivieren des jeweils zuletzt aktivierten Aufladevorgangs bei Überschreitung des oberen Stromschwellwerts IOS durch die Stromkurve des Eingangsstroms vermeidet, dass der eingangsseitige Ladestrom einen vorgegebenen kritischen Stromschwellwert überschreitet.

Fig. 7 veranschaulicht eine weitere Modifikation der Aufladesequenz für eine entsprechend modifizierte Auslegung der Ladesteuereinheit 1. Diese Auslegung hat zum Ziel, das erwähnte periodische Aktivieren und Deaktivieren des jeweils letzten Aufladevorgangs, im Beispiel von Fig. 6 des vierten Aufladevorgangs am vierten Ausgangsanschluss (Socket 4), zu vermeiden. Zu diesem Zweck ist die Ladesteuereinheit 1 in dieser Realisierung dafür eingerichtet, den unteren Stromschwellwert IUS um ein vorgebbares Stromreduktionsinkrement DUSR zu reduzieren, wenn der von der Energiequelle bereitgestellte Strom und/oder der von der Ladesteuereinheit 1 an dem betreffenden Ausgangsanschluss 1A1, ..., 1An bereitgestellte Strom den oberen Stromschwellwert IOS überschreitet.

Die Aufladesequenz von Fig. 7 entspricht zunächst bis zum Zeitpunkt t₇ mit der Überschreitung des oberen Stromschwellwerts IOS durch die Stromkurve des der Ladesteuereinheit 1 eingangsseitig zugeführten Stroms der Aufladesequenz von Fig. 6, wie oben erläutert. Nun reduziert jedoch die Ladesteuereinheit 1 aus Anlass der Überschreitung des oberen Stromschwellwerts IOS durch die besagte Stromkurve den unteren Stromschwellwert IUS um das vorgegebene Stromreduktionsinkrement DUSR auf einen entsprechend niedrigeren, neuen unteren Stromschwellwert. Dies hat zur Folge, dass der Strom des Energieversorgungssignals EVS nach der Deaktivierung des vierten Aufladevorgangs zu einem Zeitpunkt t₁₁ zunächst nicht unter den nun abgesenkten neuen unteren Stromschwellwert IUS fällt, sondern oberhalb von diesem verbleibt.

Da somit der eingangsseitige Strom der Ladesteuereinheit 1 noch über dem aktuellen unteren Stromschwellwert IUS liegt, nimmt die Ladesteuereinheit 1 zunächst keine erneute Aktivierung des vierten Aufladevorgangs vor. Erst wenn der Strom des Energieversorgungssignals EVS zu einem Zeitpunkt t₁₂ unter den aktuellen, abgesenkten unteren Stromschwellwert IUS gesunken ist, beispielsweise weil der erste bis dritte Aufladevorgang insgesamt nicht mehr so viel Ladestrom beanspruchen, aktiviert die Ladesteuereinheit 1 erneut den vierten Aufladevorgang am vierten Ausgangsanschluss (Socket 4). Die Stromkurve des Eingangsstroms steigt dadurch wieder an, bleibt jedoch nun ab einem Zeitpunkt t₁₃ konstant unterhalb des oberen Stromschwellwerts IOS. Durch diese hystereseartige Anpassung des unteren Stromschwellwerts IUS vermeidet die Ladesteuereinheit 1 folglich das periodische Aktivieren und Deaktivieren des jeweils letzten Aufladevorgangs, wie dies im Ausführungsbeispiel von Fig. 6 für den vierten Aufladevorgang der Fall ist.

Das Stromreduktionsinkrement DUSR ist auf einen je nach Anwendungsfall geeigneten Wert vorgebbar, meist auf einen Wert zwischen 1A und 5A, insbesondere zwischen mindestens 2A und höchstens 4A.

In vorteilhaften Ausführungen ist die Ladesteuereinheit 1 des Weiteren dafür eingerichtet, den zuvor um das vorgebbare Stromreduktionsinkrement DUSR reduzierten unteren Stromschwellwert IUS um ein vorgebbares Stromerhöhungsinkrement DUSE anzuheben, wenn bei gleicher Aufladekonfiguration der von der Energiequelle bereitgestellte Strom und/oder der von der Ladesteuereinheit 1 an dem betreffenden Ausgangsanschluss 1A1, ..., 1An bereitgestellte Strom den oberen Stromschwellwert IOS während einer vorgebbaren Ladeüberwachungszeit LZ nicht überschreitet. Dies ermöglicht zu einem geeigneten Zeitpunkt eine Wiederanhebung des zuvor abgesenkten unteren Stromschwellwerts IUS, so dass vermieden wird, dass der untere Stromschwellwert IUS dauerhaft abgesenkt bleibt. Das Ausführungsbeispiel von Fig. 7 bezieht sich auf eine derartige zusätzliche Auslegung der Ladesteuereinheit 1. Wie in Fig. 7 veranschaulicht, hebt die Ladesteuereinheit 1 den zuvor abgesenkten unteren Stromschwellwert IUS zu einem Zeitpunkt t₁₄ um das vorgegebene Stromerhöhungsinkrement DUSE an, wenn zu diesem Zeitpunkt t₁₄ die vorgegebene Ladeüberwachungszeit LZ verstrichen ist und die Stromkurve des Stroms des Energieversorgungssignals EVS während dieser Ladeüberwachungszeit LZ den oberen Stromschwellwert IOS nicht überschritten hat.

Das Stromerhöhungsinkrement DUSE ist auf einen für den jeweiligen Anwendungsfall geeigneten Wert vorgebbar, insbesondere zwischen 1A und 5A, und in vielen Fällen zwischen mindestens 2A und höchstens 4A. Dabei kann das Stromerhöhungsinkrement DUSE je nach Bedarf auf den gleichen Wert wie das Stromreduktionsinkrement DUSR oder auf einen von diesem verschiedenen Wert vorgegeben werden.

Die vorstehend erläuterten Funktionalitäten hinsichtlich der Durchführung der Aufladevorgänge in den Sequenzen gemäß den Fig. 5 bis 7 verwenden als maßgebliches Stromkriterium den Strom des Energieversorgungssignals EVS, wie er eingangsseitig der Ladesteuereinheit 1 vorliegt und gemessen wird. In entsprechenden modifizierten Ausführungen ergeben sich die gleichen Funktionalitäten der Ladesteuereinheit 1 unter Verwendung der in dem oder den Ausgangsanschlüssen 1A1, ..., 1An ausgangsseitig fließenden und wie im Beispiel von Fig. 2 gemessenen Ausgangsströme. An die Stelle der Stromkurve für den von der Energiequelle bereitgestellten Strom des Energieversorgungssignals EVS tritt dann der von der Ladesteuereinheit 1 an dem jeweiligen Ausgangsanschluss 1A1, ..., 1An bereitgestellte und dort gemessene Ladestrom. In weiteren modifizierten Ausführungen werden für diese im Zusammenhang mit den Fig. 5 bis 7 erläuterten Funktionalitäten der Ladesteuereinheit 1 sowohl der eingangsseitige, von der Energiequelle mit dem Energieversorgungssignal EVS bereitgestellte Strom als auch der Ladestrom am jeweiligen Ausgangsanschluss 1A1, ..., 1An in Kombination berücksichtigt.

Es versteht sich, dass die betreffenden Stromschwellwerte, wie der untere Stromschwellwert IUS und der obere Stromschwellwert IOS, auf geeignet modifizierte Werte festgelegt werden, je nachdem, ob nur der Strom des Energieversorgungssignals EVS oder nur die ausgangsseitigen Ladeströme an den Ausgangsanschlüssen 1A1, ..., 1An oder sowohl der eingangsseitige Strom als auch die ausgangsseitigen Ströme für die Bewertung herangezogen werden.

Insbesondere kann für den Fall der ausgangsseitigen Stromerfassung vorgesehen sein, dass das Stromerhöhungsinkrement DUSE an dem betreffenden Ausgangsanschluss 1A1, ..., 1An dem an diesem Ausgangsanschluss bereitgestellten, erfassten Strom entsprechend gewählt wird, d.h. für jeden Ausgangsanschluss 1A1, ..., 1An kann individuell ein eigenes Stromerhöhungsinkrement DUSE1, ..., DUSEn vorgesehen sein, wobei diese Stromerhöhungsinkremente DUSE1, ..., DUSEn unabhängig voneinander unterschiedliche Werte annehmen können. In gleicher Weise kann in diesem Fall für jeden Ausgangsanschluss 1A1, ..., 1An die Zuordnung eines eigenen unteren Stromschwellwertes IUS1, ..., IUSn vorgesehen sein, die unabhängig voneinander unterschiedliche Werte annehmen können. Analoges kann bei Bedarf auch für den oberen Stromschwellwert IOS vorgesehen sein, d.h. eine individuelle Zuordnung eines eigenen oberen Stromschwellwertes IOS1, ..., IOSn zum jeweiligen Ausgangsanschluss 1A1, ..., 1An.

Es sei an dieser Stelle erwähnt, dass das jeweilige, oben erläuterte Reduzieren bzw. Wiederanheben eines betreffenden Stromschwellwertes je nach Bedarf und Anwendungsfall ein korreliertes passendes Reduzieren bzw. Wiederanheben des oder der etwaigen übrigen Stromschwellwerte nach sich zieht, wie sich dies für den Fachmann versteht.

In vorteilhaften Ausführungsformen ist die Batterieladesteuerungseinrichtung mit ihrer Ladesteuereinheit 1 dafür ausgelegt, das Aufladeverhalten für die angekoppelte Ladegerätanordnung an ein begrenztes Leistungsvermögen der Energiequelle anzupassen. Dies kann insbesondere für Fälle zweckmäßig sein, in denen das Leistungsabgabevermögen der Energiequelle zeitlichen Schwankungen unterworfen oder aus anderen Gründen in gewissen Zeiträumen beschränkt ist. Dies betrifft beispielsweise Energiequellen in Form von Generatoren, Brennstoffzellen, Photovoltaik- und Windkraftanlagen.

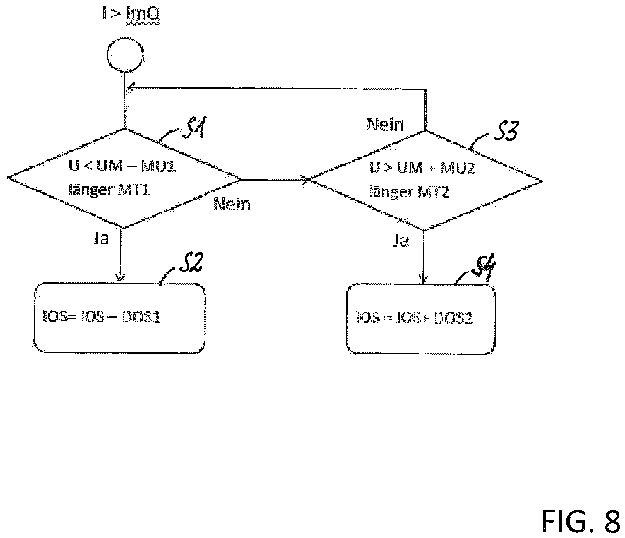

Für diese Funktionalität ist die Ladesteuereinheit 1 in vorteilhaften Ausführungen dafür eingerichtet, eine Unterschreitung der Spannung des Energieversorgungssignals EVS um ein vorgebbares Unterschreitungsmaß MU1 unter einen vorgebbaren Spannungsmindestsollwert UM für eine vorgebbare Unterschreitungs-Mindestzeitdauer MT1 zu erkennen und daraufhin den oberen Stromschwellwert IOS um ein vorgebbares Stromabsenkinkrement DOS1 abzusenken. Diese Auslegung der Ladesteuereinheit ist im linken Teil des Flussdiagramms von Fig. 8 veranschaulicht. Je nach Anwendungsfall sind der Spannungsmindestsollwert UM und das Unterschreitungsmaß MU1 sowie die Unterschreitungs-Mindestzeitdauer MT1 auf jeweils geeignete Werte vorgegeben, z.B. der Spannungsmindestsollwert UM auf einen Wert zwischen 206V und 208V, insbesondere 207V, und/oder das Unterschreitungsmaß MU1 auf einen Wert zwischen 1V und 2V und/oder die Unterschreitungs-Mindestzeitdauer MT1 auf einen Wert zwischen 9ms und 11ms, insbesondere 10ms. Weiter ist das Stromabsenkinkrement DOS1 beispielsweise auf einen Wert zwischen 1A und 4A, insbesondere auf 2A oder 2,5A, vorgegeben. Diese Vorgabewerte eignen sich speziell für ein Energieversorgungssignal EVS mit einer Nennspannung von 230V, für welche sich bei üblicher zulässiger Toleranz von ±10% ein Minimal-Sollwert der Spannung von 207V ergibt.

Des Weiteren ist die Ladesteuereinheit 1 für diese Funktionalität in vorteilhaften Ausführungen dafür eingerichtet, eine Überschreitung der Spannung des Energieversorgungssignals EVS um ein vorgebbares Überschreitungsmaß MU2 über einen bzw. den vorgebbaren Spannungsmindestsollwert UM für eine vorgebbare Überschreitungs-Mindestzeitdauer MT2 zu erkennen und daraufhin den oberen Stromschwellwert IOS um ein vorgebbares Stromanhebeinkrement DOS2 anzuheben. Diese Auslegung der Ladesteuereinheit 1 ist im rechten Teil des Flussdiagramms von Fig. 8 veranschaulicht. Dabei ist der Spannungsmindestsollwert UM in entsprechenden Realisierungen auf einen Wert zwischen 206V und 208V, insbesondere 207V, vorgebbar, und/oder das Überschreitungsmaß MU2 ist auf einen Wert zwischen 1V und 2V vorgebbar, und/oder die Unterschreitungs-Mindestzeitdauer MT2 ist auf einen Wert zwischen 9ms und 11ms, insbesondere 10ms, vorgebbar und/oder das Stromanhebeinkrement DOS2 ist auf einen Wert zwischen 1A und 4A, insbesondere 2A, vorgebbar.

Insgesamt erfüllt die Ladesteuereinheit in diesen Ausführungen somit folgende, in Fig. 8 als Flussdiagramm veranschaulichte Funktionalität. Zunächst überwacht die Ladesteuereinheit 1 laufend, ob der Strom I des Energieversorgungssignals EVS größer als ein vorgegebener maximaler Stromgrenzwert ImQ der Energiequelle wird, wobei dieser Grenzwert typischerweise zwischen 10A und 32A liegt, bei einer zulässigen Dauerlast von 16A beispielsweise bei ca. 14A bis 15A. Wenn dabei erkannt wird, dass der Stromfluss zu groß wird, erfolgt in einem Abfrageschritt S1 die Überprüfung, ob eine Versorgungsspannung U der Energiequelle einbricht. Dazu wird abgefragt, ob die Spannung U länger als die Unterschreitungs-Mindestzeitdauer MT1 um mehr als das Unterschreitungsmaß MU1 niedriger als der Spannungsmindestsollwert UM ist. Wenn dies der Fall ist, wird dies als Spannungseinbruch gewertet, und in einem anschließenden Stromreduktionsschritt S2 wird der obere Stromschwellwert IOS um das vorgegebene Stromabsenkinkrement DOS1 abgesenkt, um dem Spannungseinbruch entgegenzuwirken und eine Leistungsanpassung bereitzustellen.

Wenn hingegen im Abfrageschritt S1 erkannt wird, dass kein Spannungseinbruch vorliegt, wird in einem anschließenden Abfrageschritt S3 überprüft, ob die Spannung U der Energiequelle länger als die Überschreitungs-Mindestzeitdauer MT2 um das Überschreitungsmaß MU2 über dem Spannungsmindestsollwert UM liegt. Wenn dies der Fall ist, wird dies dahingehend gewertet, dass der obere Stromschwellwert IOS wieder angehoben werden kann. Dazu wird in einem anschließenden Stromanhebeschritt S4 der obere Stromschwellwert IOS um das vorgegebene Stromanhebeinkrement DOS2 angehoben. Wenn im Abfrageschritt S3 erkannt wird, dass die Spannung U die Abfragebedingung nicht erfüllt, wird dies dahingehend gewertet, dass der obere Stromschwellwert IOS noch nicht wieder angehoben werden kann, und es wird zum Beginn des Abfragezyklus zurückgekehrt.

Mit dieser Maßnahme ermöglicht die Batterieladesteuerungseinrichtung mit ihrer Ladesteuereinheit folglich eine optimale Leistungsanpassung der jeweils aktiven Aufladevorgänge für die angekoppelte Ladegerätanordnung an das aktuelle Leistungsvermögen der Energiequelle oder genauer gesagt an die durch das Energieversorgungssignal EVS zuführbare Aufladeleistung.

In nicht explizit gezeigter Weise kann die Ladesteuereinheit 1 zusätzlich zu den vorgenannten Funktionalitäten Ladepriorisierungsinformationen aufweisen, um die Aktivierung eines jeweiligen Aufladevorgangs von diesen Ladepriorisierungsinformationen abhängig zu machen. Dabei können die Ladepriorisierungsinformationen eine Prioritätsinformation bezüglich der Ausgangsanschlüsse 1A1, ..., 1An und/oder eine Prioritätsinformation bezüglich der Ladeplätze und/oder eine Prioritätsinformation bezüglich der Ladezustände der aufzuladenden Batterieeinheiten und/oder eine Prioritätsinformation bezüglich Ladevorgaben für den jeweiligen Ladeplatz und/oder für die jeweilige aufzuladende Batterieeinheit umfassen. Mit dieser Maßnahme können die Aufladevorgänge bei Bedarf weitergehend im Hinblick auf die jeweiligen Anforderungen optimiert werden.

Wie aus den obigen Erläuterungen deutlich wird, bildet die Ladesteuereinheit 1 somit in der erfindungsgemäßen Batterieladesteuerungseinrichtung eine Leistungsverteilungseinheit, die in optimierter Weise möglichst viel Leistung von der elektrischen Energiequelle zum Aufladen angekoppelter Batterieeinheiten abruft und überträgt und dabei in der Lage ist, die Ladeleistung bedarfsgerecht und optimiert auf die vorzugsweise mehreren, insbesondere elektrisch parallelen, Ausgangsanschlüsse 1A1, ..., 1An und folglich die daran angekoppelten Ladegeräte mit ihren zugehörigen Ladeplätzen aufzuteilen. Die erläuterte erfindungsgemäße Batterieladesteuerungseinrichtung ist dabei in der Lage, das erfindungsgemäße Batterieladesteuerungsverfahren durchzuführen.

Wie die gezeigten und die weiteren oben erläuterten Ausführungsbeispiele deutlich machen, stellt die Erfindung in vorteilhafter Weise eine Batterieladesteuerungseinrichtung und ein von dieser durchführbares Batterieladesteuerungsverfahren zur Verfügung, mit denen sich Aufladevorgänge wiederaufladbarer Batterieeinheiten unter Nutzung elektrischer Energie einer elektrischen Energiequelle in optimierter Weise steuern lassen, insbesondere im Hinblick auf eine zu jedem Zeitpunkt optimale Leistungsbereitstellung und Leistungsverteilung für vorzugsweise eine Mehrzahl gleichzeitig aktivierter Aufladevorgänge.

## Patentansprüche

1. Batterieladesteuerungseinrichtung zur Steuerung von Aufladevorgängen wiederaufladbarer Batterieeinheiten, wozu elektrische Energie von einer elektrischen Energiequelle bereitgestellt wird, umfassend
- eine Ladesteuereinheit (1), die einen an die Energiequelle ankoppelbaren Eingangsanschluss (1E) zur Zuführung eines Energieversorgungssignals (EVS) und eine Ausgangsanschlusskonfiguration mit einem oder mehreren Ausgangsanschlüssen (1A1, ..., 1An) zur Ankopplung einer eine oder mehrere Ladegeräte mit jeweils einem oder mehreren Ladeplätzen für die wiederaufladbaren Batterieeinheiten umfassenden Ladegerätanordnung aufweist,
**dadurch gekennzeichnet, dass**
- die Ladesteuereinheit (1) dafür eingerichtet ist, einen maximalen Stromlastzustand einer elektrischen Stromüberlastsicherung der Energiequelle zu erkennen und bei erkanntem maximalem Stromlastzustand der Stromüberlastsicherung den durch das Energieversorgungssignal (EVS) von der Energiequelle über die Stromüberlastsicherung geführten Strom auf die Einhaltung des erkannten maximalen Stromlastzustands der Stromüberlastsicherung zu steuern, und/oder
- die Ladesteuereinheit (1) dafür eingerichtet ist, den von der Energiequelle am Eingangsanschluss (1E) bereitgestellten Strom und/oder einen an einem jeweiligen Ausgangsanschluss (1A1, ..., 1An) bereitgestellten Strom zu überwachen und die Aktivierung eines Aufladevorgangs an einem jeweiligen Ladeplatz freizugeben, wenn der von der Energiequelle bereitgestellte Strom und/oder der von der Ladesteuereinheit (1) an dem betreffenden Ausgangsanschluss (1A1, ..., 1An) bereitgestellte Strom einen zugehörig vorgebbaren unteren Stromschwellwert (IUS) nicht überschreitet, und/oder einen für einen Aufladevorgang an einem jeweiligen Ladeplatz bereitgestellten Strom zu reduzieren, wenn der von der Energiequelle bereitgestellte Strom und/oder der von der Ladesteuereinheit (1) an dem betreffenden Ausgangsanschluss (1A1, ..., 1An) bereitgestellte Strom einen zugehörig vorgebbaren oberen Stromschwellwert (IOS) überschreitet.

2. Batterieladesteuerungseinrichtung nach Anspruch 1, weiter **dadurch gekennzeichnet, dass** die Ladesteuereinheit (1) dafür eingerichtet ist, eine Signalstärke (SF) eines in einem vorgebbaren Überwachungsfrequenzbereich (FU) liegenden Frequenzanteils einer Wechselspannung und/oder eines Wechselstroms des Energieversorgungssignals (EVS) der Energiequelle zu ermitteln und auf das Vorliegen des maximalen Stromlastzustands der Stromüberlastsicherung zu erkennen, wenn die Signalstärke um ein vorgebbares Maß (DSS) über einer Normalsignalstärke liegt, wobei der Überwachungsfrequenzbereich (FU) oberhalb von 10kHz liegt, insbesondere oberhalb von 25kHz und/oder unterhalb von 150kHz.

3. Batterieladesteuerungseinrichtung nach Anspruch 1 oder 2, weiter **dadurch gekennzeichnet, dass** die Ladesteuereinheit (1) dafür eingerichtet ist, einen oder mehrere Aufladevorgänge nur bis zum Erreichen des maximalen Stromlastzustands der Stromüberlastsicherung freizugeben.

4. Batterieladesteuerungseinrichtung nach einem der Ansprüche 1 bis 3, weiter **dadurch gekennzeichnet, dass** die Ladesteuereinheit (1) dafür eingerichtet ist, den unteren Stromschwellwert (IUS) um ein vorgebbares Stromreduktionsinkrement (DUSR) zu reduzieren, wenn der von der Energiequelle bereitgestellte Strom und/oder der von der Ladesteuereinheit (1) an dem betreffenden Ausgangsanschluss (1A1, ..., 1An) bereitgestellte Strom den oberen Stromschwellwert (IOS) überschreitet.

5. Batterieladesteuerungseinrichtung nach Anspruch 4, weiter **dadurch gekennzeichnet, dass** das Stromreduktionsinkrement (DUSR) auf einen Wert zwischen 1A und 5A, insbesondere zwischen mindestens 2A und höchstens 4A, vorgebbar ist.

6. Batterieladesteuerungseinrichtung nach Anspruch 4 oder 5, weiter **dadurch gekennzeichnet, dass** die Ladesteuereinheit (1) dafür eingerichtet ist, den zuvor um das vorgebbare Stromreduktionsinkrement (DUSR) reduzierten unteren Stromschwellwert (IUS) um ein vorgebbares Stromerhöhungsinkrement (DUSE) anzuheben, wenn der von der Energiequelle bereitgestellte Strom und/oder der von der Ladesteuereinheit (1) an dem betreffenden Ausgangsanschluss (1A1, ..., 1An) bereitgestellte Strom den oberen Stromschwellwert (IOS) während einer vorgebbaren Ladeüberwachungszeit (LZ) nicht überschreitet.

7. Batterieladesteuerungseinrichtung nach Anspruch 6, weiter **dadurch gekennzeichnet, dass** das Stromerhöhungsinkrement (DUSE) auf einen Wert zwischen 1A und 5A, insbesondere zwischen mindestens 2A und höchstens 4A, und/oder auf den gleichen Wert wie das Stromreduktionsinkrement (DUSR) vorgebbar ist.

8. Batterieladesteuerungseinrichtung nach einem der Ansprüche 1 bis 7, weiter **dadurch gekennzeichnet, dass** die Ladesteuereinheit (1) dafür eingerichtet ist, eine Unterschreitung der Spannung des Energieversorgungssignals (EVS) um ein vorgebbares Unterschreitungsmaß (MU1) unter einen vorgebbaren Spannungsmindestsollwert (UM) für eine vorgebbare Unterschreitungs-Mindestzeitdauer (MT1) zu erkennen und daraufhin den oberen Stromschwellwert (IOS) um ein vorgebbares Stromabsenkinkrement (DOS1) abzusenken.

9. Batterieladesteuerungseinrichtung nach Anspruch 8, weiter **dadurch gekennzeichnet, dass** der Spannungsmindestsollwert (UM) auf einen Wert zwischen 206V und 208V, insbesondere auf 207V, vorgebbar ist und/oder das Unterschreitungsmaß (MU1) auf einen Wert zwischen 1V und 2V vorgebbar ist und/oder die Unterschreitungs-Mindestzeitdauer (MT1) auf einen Wert zwischen 9ms und 11ms, insbesondere auf 10ms, vorgebbar ist und/oder das Stromabsenkinkrement (DOS1) auf einen Wert zwischen 1A und 4A, insbesondere auf 2A, vorgebbar ist.

10. Batterieladesteuerungseinrichtung nach einem der Ansprüche 1 bis 9, weiter **dadurch gekennzeichnet, dass** die Ladesteuereinheit (1) dafür eingerichtet ist, eine Überschreitung der Spannung des Energieversorgungssignals (EVS) um ein vorgebbares Überschreitungsmaß (MU2) über einen oder den vorgebbaren Spannungsmindestsollwert (UM) für eine vorgebbare Überschreitungs-Mindestzeitdauer (MT2) zu erkennen und daraufhin den oberen Stromschwellwert (IOS) um ein vorgebbares Stromanhebeinkrement (DOS2) anzuheben.

11. Batterieladesteuerungseinrichtung nach Anspruch 10, weiter **dadurch gekennzeichnet, dass** der Spannungsmindestsollwert (UM) auf einen Wert zwischen 206V und 208V, insbesondere auf 207V, vorgebbar ist und/oder das Überschreitungsmaß (MU2) auf einen Wert zwischen 1V und 2V vorgebbar ist und/oder die Unterschreitungs-Mindestzeitdauer (MT2) auf einen Wert zwischen 9ms und 11ms, insbesondere auf 10ms, vorgebbar ist und/oder das Stromanhebeinkrement (DOS2) auf einen Wert zwischen 1A und 4A, insbesondere auf 2A, vorgebbar ist.

12. Batterieladesteuerungseinrichtung nach einem der Ansprüche 1 bis 11, weiter **dadurch gekennzeichnet, dass** die Ladesteuereinheit (1) Ladepriorisierungsinformationen aufweist, von denen abhängig sie die Aktivierung eines jeweiligen Ladevorgangs initiiert, wobei die Ladepriorisierungsinformationen eine Ausgangsanschluss-Prioritätsinformation und/oder eine Ladeplatz-Prioritätsinformation und/oder eine Ladezustands-Prioritätsinformation und/oder eine Ladevorgabe-Prioritätsinformation umfassen.

13. Batterieladesteuerungsverfahren zur Steuerung von Aufladevorgängen wiederaufladbarer Batterieeinheiten, wozu elektrische Energie von einer elektrischen Energiequelle bereitgestellt wird, wobei
- ein Energieversorgungssignal (EVS) der Energiequelle einem Eingangsanschluss (1E) einer Ladesteuereinheit (1) zugeführt wird, die über eine Ausgangsanschlusskonfiguration mit einem oder mehreren parallelen Ausgangsanschlüssen (1A1, ..., 1An) eine Ladegerätanordnung mit Ladestrom speist, die eine oder mehrere Ladegeräte mit jeweils einem oder mehreren Ladeplätzen für die wiederaufladbaren Batterieeinheiten umfasst,
**dadurch gekennzeichnet, dass**
- ein maximaler Stromlastzustand einer elektrischen Stromüberlastsicherung der Energiequelle erkannt wird und bei erkanntem maximalem Stromlastzustand der Stromüberlastsicherung der durch das Energieversorgungssignal (EVS) von der Energiequelle über die Stromüberlastsicherung geführte Strom auf die Einhaltung des erkannten maximalen Stromlastzustands der Stromüberlastsicherung begrenzt wird, und/oder
- der von der Energiequelle am Eingangsanschluss (1E) der Ladesteuereinheit (1) bereitgestellte Strom und/oder ein an einem jeweiligen Ausgangsanschluss (1A1, ..., 1An) der Ladesteuereinheit (1) bereitgestellte Strom überwacht wird und die Aktivierung eines Aufladevorgangs an einem jeweiligen Ladeplatz nur freigegeben wird, wenn der von der Energiequelle bereitgestellte Strom und/oder der von der Ladesteuereinheit (1) an dem betreffenden Ausgangsanschluss (1A1, ..., 1An) bereitgestellte Strom einen zugehörig vorgebbaren unteren Stromschwellwert (IUS) nicht überschreitet, und/oder ein Aufladevorgang an einem jeweiligen Ladeplatz deaktiviert wird, wenn der von der Energiequelle bereitgestellte Strom und/oder der von der Ladesteuereinheit (1) an dem betreffenden Ausgangsanschluss (1A1, ..., 1An) bereitgestellte Strom einen zugehörig vorgebbaren oberen Stromschwellwert (IOS) überschreitet.
